# EUROPEAN PATENT SPECIFICATION

(11) **EP 4 447 160 B1**
(45) Date of publication and mention of the grant of the patent: **25.02.2026**
(21) Application number: 23898291.2
(22) Date of filing: 29.11.2023
(51) Int. Cl.: H01M 4/36, H01M 4/131, H01M 10/052, H01M 4/525, H01M 4/02, C01G 53/506, H01M 4/485, H01M 4/505, H01M 4/62, H01M 10/0525, H01M 10/0562

(54) **CATHODE ACTIVE MATERIAL FOR ALL-SOLID-STATE BATTERY, CATHODE FOR ALL-SOLID-STATE BATTERY, AND ALL-SOLID-STATE BATTERY COMPRISING SAME**
KATHODENAKTIVMATERIAL FÜR EINE FESTKÖRPERBATTERIE, KATHODE FÜR EINE FESTKÖRPERBATTERIE UND FESTKÖRPERBATTERIE DAMIT
MATÉRIAU ACTIF DE CATHODE POUR BATTERIE ENTIÈREMENT SOLIDE, CATHODE POUR BATTERIE ENTIÈREMENT SOLIDE ET BATTERIE ENTIÈREMENT SOLIDE LES COMPRENANT

(30) Priority: 02.12.2022 KR 20220166647
(43) Date of publication of application: 16.10.2024
(73) Proprietor: LG Energy Solution, Ltd., Seoul 07335 (KR)
(72) Inventor: KIM, Myeongsoo, Daejeon 34122 (KR); KIM, Taegon, Daejeon 34122 (KR); OH, Kyungbae, Daejeon 34122 (KR)
(74) Representative: Goddar, Heinz J.
(86) International application number: PCT/KR2023/019430
(87) International publication number: WO 2024/117765

(56) References cited:
- WO-A1-2022/056039
- WO-A1-2023/114502
- CN-A- 114 005 982
- KR-A- 20150 062 989
- KR-A- 20180 041 872
- US-B2- 9 214 674
- WANG JING, YU YANGYANG, LI BING, FU TAO, XIE DONGQUAN, CAI JIJUN, ZHAO JINBAO: "Improving the electrochemical properties of LiNi 0.5 Co 0.2 Mn 0.3 O 2 at 4.6 V cutoff potential by surface coating with Li 2 TiO 3 for lithium-ion batteries", PHYSICAL CHEMISTRY CHEMICAL PHYSICS, ROYAL SOCIETY OF CHEMISTRY, vol. 17, no. 47, 1 January 2015 (2015-01-01), pages 32033 - 32043, XP093050802, ISSN: 1463-9076, DOI: 10.1039/C5CP05319F
- WALTHER FELIX, STRAUSS FLORIAN, WU XIAOHAN, MOGWITZ BORIS, HERTLE JONAS, SANN JOACHIM, ROHNKE MARCUS, BREZESINSKI TORSTEN, JANEK J: "The Working Principle of a Li 2 CO 3 /LiNbO 3 Coating on NCM for Thiophosphate-Based All-Solid-State Batteries", CHEMISTRY OF MATERIALS, AMERICAN CHEMICAL SOCIETY, US, vol. 33, no. 6, 23 March 2021 (2021-03-23), US , pages 2110 - 2125, XP093177072, ISSN: 0897-4756, DOI: 10.1021/acs.chemmater.0c04660

## Description

### [Technical Field]

The present application claims the benefit and priority to Korean Patent Application No. 10-2022-0166647, dated December 2, 2022.

The present invention relates to a positive electrode active material for an all-solid-state battery, a positive electrode for an all-solid-state battery, and an all-solid-state battery comprising the same.

### [Related Art]

While lithium secondary batteries have primarily been applied to small-scale applications such as mobile devices and laptop computers, research has recently expanded to medium and large-scale applications such as energy storage systems (ESS) and electric vehicles (EV).

For these medium and large-scale lithium secondary batteries, unlike smaller ones, the operating environment is harsher (e.g., temperature and shock) and more batteries need to be used, so safety needs to be ensured along with good performance and affordable price.

Currently, most commercially available lithium secondary batteries utilize an organic liquid electrolyte consisting of lithium salts dissolved in a flammable organic solvent, which has a potential risk of leakage, ignition, and explosion. Therefore, the use of a solid electrolyte instead of the organic liquid electrolyte has been attracting attention as an alternative to overcome the safety issues.

An all-solid-state battery consists of a positive electrode, a solid electrolyte, and a negative electrode, and although sulfides and oxides can be used as solid electrolytes for all-solid-state batteries, a sulfide-based solid electrolyte is the most promising material in terms of lithium ion conductivity.

However, when a sulfide-based solid electrolyte is used, an active material coated with cobalt (Co) is not typically used for a positive electrode because of the reaction between cobalt and sulfur.

In addition, during the charge and discharge cycles of all-solid-state batteries, reactions occur at the interface between the positive electrode active material and the sulfide-based solid electrolyte, resulting in the diffusion of components such as Co, P or S at the interface, which degrades the lifetime characteristics and needs improvement thereon.

### [Prior Art References]

### [Patent Literature]

(Patent reference 1) Korean Patent Laid-open Publication No. 10-2010-0120153 (November 12, 2010)
(Patent reference 2) Korean Patent Laid-open Publication No. 10-2018-0076132 (July 5, 2018)

WO2022/056039A1 discloses a composition comprising a cathode active material and a coating comprising lithium, carbon, oxygen, zirconium, phosphorus, or a combination thereof; and a solid-state cathode comprising this coated cathode active material.

US9214674B2 describes a coated active material comprising a cathode active material in a particle shape and a coating layer for the coating the cathode active material containing a lithium ion conductive oxide, wherein the coating layer further contains lithium carbonate.

### [Detailed Description of the Invention]

### [Technical Problem]

An object of the present invention is to provide a positive electrode active material for an all-solid-state battery that can improve interfacial resistance with a solid electrolyte in the positive electrode active material layer and suppress side reactions by forming a coating layer comprising lithium carbon oxide and lithium titanium oxide on the positive electrode active material for an all-solid-state battery.

Another object of the present invention is to provide a positive electrode for an all-solid-state battery comprising the positive electrode active material for an all-solid-state battery and a sulfide-based solid electrolyte.

It is another object of the present invention to provide an all-solid-state battery having improved electrochemical properties and life characteristics by applying the positive electrode active material for an all-solid-state battery to the positive electrode.

### [Technical Solution]

One embodiment of the present invention provides a positive electrode active material for an all-solid-state battery comprising a core capable of reversible adsorption and release of lithium ions and a coating layer formed on a surface of the core, wherein the coating layer comprises lithium carbon oxide represented by Formula 1 below and lithium titanium oxide represented by Formula 2 below:

[Formula 1] LiₐCO_{b},

wherein a is 0<a≤4 and b is 0<b≤4;

   [Formula 2] LiₓTi_{y}O₄,
wherein x is 0.8≤x≤1.4 and y is 1.6≤y≤2.2.

The coating layer comprises a first coating layer and a second coating layer, respectively, from a center of the core toward a surface of the core, wherein the first coating layer comprises lithium carbon oxide represented by formula 1 and the second coating layer comprises lithium titanium oxide represented by formula 2.

The coating layer may be comprised in an amount of 0.1 to 10 parts by weight, based on a total of 100 parts by weight of the positive electrode active material for an all-solid-state battery comprising both the core and coating layer.

The lithium carbon oxide represented by Formula 1 may be comprised in an amount of 0.1 to 1.6 parts by weight, based on a total of 100 parts by weight of the positive electrode active material for an all-solid-state battery comprising both the core and coating layer.

The lithium titanium oxide represented by Formula 2 may be comprised in an amount of 0.1 to 1.5 parts by weight, based on a total of 100 parts by weight of the positive electrode active material for an all-solid-state battery comprising both the core and coating layer.

The lithium carbon oxide represented by formula 1 and the lithium titanium oxide represented by formula 2 included in the coating layer are comprised in a weight ratio of 95:5 to 25:75.

The thickness ratio of the first coating layer and the second coating layer may be 20:80 to 80:20.

The thickness of the first coating layer may be 0.001 to 0.02 µm, and the thickness of the second coating layer may be 0.001 to 0.02 µm.

The lithium carbon oxide may be Li₂CO₃ and the lithium titanium oxide may be Li₄Ti₅O₁₂.

Another embodiment of the present invention provides a positive electrode for an all-solid-state battery, comprising the positive electrode active material for an all-solid-state battery and a sulfide-based solid electrolyte.

The sulfide-based solid electrolytes may be at least one selected from the group consisting of Li₂S-P₂S₅, Li₂S-P₂S₅-LiX (wherein X is a halogen atom), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (wherein m and n are positive numbers, and Z is any one of Ge, Zn and Ga), Li₂S-GeS₂, Li₂S-SiS₂-Li₃PO₄, Li₂S-SiS₂-LiₚMO_{q} (wherein p and q are positive numbers, and M is any one of P, Si, Ge, B, Al, Ga and In), Li₇₋ₓPS₆₋ₓClₓ (wherein 0≤x≤2), Li₇₋ₓPS₆₋ₓBrₓ (wherein 0≤x≤2), and Li₇₋ₓPS₆₋ₓIₓ (wherein 0≤x≤2).

The sulfide-based solid electrolyte may be an argyrodite-type solid electrolyte comprising one or more selected from the group consisting of Li₆PS₅Cl, Li₆PS₅Br and Li₆PS₅I.

Another embodiment of the present invention provides an all-solid-state battery comprising a positive electrode, a negative electrode, and a solid electrolyte layer disposed between the positive electrode and negative electrode, wherein the positive electrode comprises the positive electrode for an all-solid-state battery.

### [Advantageous Effects]

According to the present invention, by forming a coating layer on a positive electrode active material for an all-solid-state battery, wherein the coating layer simultaneously includes lithium carbon oxide and lithium titanium oxide, it is possible to improve the interfacial resistance of the positive electrode active material with a solid electrolyte in a positive electrode active material layer of an all-solid-state battery, and to exhibit the property of inhibiting side reactions. Furthermore, by applying the positive electrode active material for an all-solid-state battery having the coating layer to the positive electrode, the electrochemical properties and life characteristics of the all-solid-state battery including the positive electrode active material can be improved.

### [Brief Description of Drawing]

FIGs. 1 and 2 are schematic diagrams of a positive electrode active material for an all-solid-state battery according to one embodiment of the present invention.
FIG. 3 shows the results of an Energy Dispersive X-ray Spectroscopy (EDAX) analysis of a positive electrode active material for an all-solid-state battery according to one embodiment of the present invention.

### [Best Mode for Practicing the Invention]

Embodiments of the present invention are described in detail. It should be noted that the terms and words used in this specification and claims are not to be construed in their ordinary or dictionary sense, but are to be interpreted in a sense and concept consistent with the technical idea of the present invention, based on the principle that the inventor(s) may properly define the concept of a term to best describe his/her invention. Accordingly, it is to be understood that the compositions described in the embodiments set forth herein are only the most preferred embodiments of the present invention and are not exhaustive of the technical ideas of the present invention, and that there may be various equivalents and variations that may be substituted for them at the time of filing.

Throughout the specification, when a part "includes" a component, it may indicate further including other components, not excluding other components, unless stated to the contrary.

In addition, the description limiting or adding components may apply to any invention and is not limited to any particular invention, unless otherwise specified.

Moreover, all numerical ranges include the values at both ends and all intermediate values therebetween, unless explicitly stated to exclude them.

Throughout the specification, the average particle size of a particle may be, for example, a median diameter (D50) measured using a laser particle size distribution meter.

A positive electrode active material for an all-solid-state battery according to one embodiment of the present invention is described below.

The present invention relates to a positive electrode active material for an all-solid-state battery, which can improve the interfacial resistance of the positive electrode active material with a solid electrolyte and inhibit side reactions, thereby improving the electrochemical properties and life characteristics of the all-solid-state battery.

In general, all-solid-state batteries do not use liquid electrolyte unlike typical lithium ion batteries, so in addition to the solid electrolyte layer, the positive electrode active material layer also contains solid electrolyte.

In order to ensure stable ionic conductivity, the effective contact between the positive electrode active material and the solid electrolyte contained in the positive electrode active material layer to form a high effective contact area is an important factor in improving the charge and discharge capacity and efficiency of the all-solid-state battery. In order to improve the effective contact area between the positive electrode active material and the solid electrolyte, a pressure of about 500 Mpa or more is applied during the manufacturing process of an all-solid-state battery, and in order to solve problems such as side reactions between the positive electrode active material and the solid electrolyte due to the pressurization process, attempts have been made to improve it by introducing a coating layer of lithium oxide containing elements such as B, Al, Zr, Nb or W on the positive electrode active material.

However, there is a problem that even if lithium oxide containing the above elements is introduced into the positive electrode active material coating layer, the interfacial resistance between the positive electrode active material and the solid electrolyte to improve the output of an all-solid-state battery containing a sulfide-based solid electrolyte and secure long-life performance is not significantly improved.

In order to solve the problem, the present invention has completed the invention by confirming that the interfacial resistance between the positive electrode active material and a solid electrolyte, especially a sulfide-based solid electrolyte, in the positive electrode active material layer can be reduced and side reactions can be suppressed by forming a coating layer on the surface of a positive electrode active material for an all-solid-state battery, but simultaneously including lithium carbon oxide and lithium titanium oxide in the coating layer.

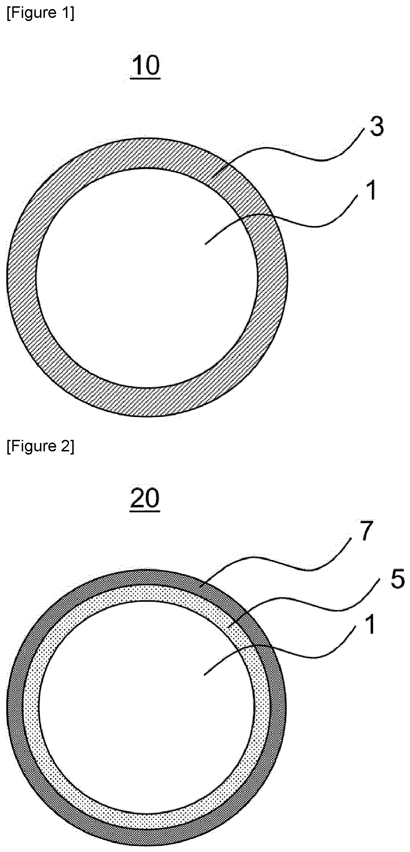

FIG. 1 is a schematic illustration of a positive electrode active material for an all-solid-state battery according to one embodiment of the present invention.

Referring to FIG. 1, a positive electrode active material for an all-solid-state battery according to one embodiment of the present invention includes a core capable of reversible adsorption and release of lithium ions and a coating layer formed on a surface of the core, wherein the coating layer comprises lithium carbon oxide represented by Formula 1 below and lithium titanium oxide represented by Formula 2 below:

[Formula 1] LiₐCO_{b},

wherein a is 0<a≤4 and b is 0<b≤4;

   [Formula 2] LiₓTi_{y}O₄,
wherein x is 0.8≤x≤1.4 and y is 1.6≤y≤2.2.

The positive electrode active material for an all-solid-state battery includes lithium carbon oxide represented by formula 1 in a coating layer formed on its surface, thereby imparting an effect of suppressing an increase in electrochemical interfacial contact resistance caused by shrinkage and expansion of the positive electrode active material during the charging and discharging process of the all-solid-state battery. Further, by including lithium titanium oxide represented by formula 2, it is possible to prevent an excessively thick solid electrolyte interfacial film from being formed on the surface of the positive electrode active material to improve the electrochemical properties and stability of the all-solid-state battery by controlling the thermal runaway factor, and to impart fast charge and discharge characteristics to the battery by facilitating the entry and exit of Li ions.

The lithium carbon oxide represented by Formula 1 and the lithium titanium oxide represented by Formula 2 are not limited to their respective formulae, but may also be represented in the form of multiples of their respective molarities to the extent that the molarity ratio of each atom is satisfied.

For example, in the case of lithium titanium oxide represented by Formula 2, the mole fraction of oxygen is fixed at 4. However, Formula 2 may be expressed, but is not limited to, in the form of multiples satisfying the mole fraction of each atom, and if the mole fraction of oxygen is 12, Formula 2 may be expressed as Li₃ₓTi_{3y}O₁₂.

In one embodiment of the present invention, the lithium carbon oxide included in the positive electrode active material coating layer for the all-solid-state battery may be, for example, Li₂CO₃, and the lithium titanium oxide may be Li₄Ti₅O₁₂.

Referring to FIG. 2, according to the present invention, the coating layer comprises a first coating layer and a second coating layer in order from the center of the core toward the surface of the core, wherein the first coating layer comprises lithium carbon oxide represented by formula 1 and the second coating layer comprises lithium titanium oxide represented by formula 2.

That is, the first coating layer close to the surface of the positive electrode active material comprises lithium carbon oxide represented by formula 1, which can solve the problem of an increase in the interfacial resistance of the positive electrode active material and the solid electrolyte due to a decrease in the mechanical contact area. The second coating layer formed on the first coating layer and located at the outermost angle of the positive electrode active material includes lithium titanium oxide represented by formula 2, which inhibits the direct interfacial contact of the positive electrode active material and the solid electrolyte, so that the entry and exit of ions other than Li⁺ ions are restricted, thereby solving the problem of increasing the resistance due to electrochemical side reactions. If, unlike the above embodiment, the first coating layer includes lithium titanium oxide represented by formula 2 and the second coating layer includes lithium carbon oxide represented by formula 1, there may be a problem that the interfacial resistance of the positive electrode active material and the solid electrolyte becomes very high because it is difficult to properly perform the roles of each coating layer described above.

In one embodiment of the present invention, the coating layer is preferably comprised in an amount of 0.1 to 10 parts by weight, based on a total of 100 parts by weight of the positive electrode active material for an all-solid-state battery comprising both the core and coating layer.

If the content of the coating layer is less than 0.1 parts by weight based on a total of 100 parts by weight of the positive electrode active material for an all-solid-state battery, there may be a problem that an intact coating layer cannot be formed, such as a partial coating on the surface of the positive electrode active material, and if it exceeds 10 parts by weight, there may be a problem that the gap between the positive electrode active material and the solid electrolyte becomes larger and the interfacial resistance increases.

In one embodiment of the present invention, the lithium carbon oxide represented by Formula 1 may be comprise in an amount of 0.1 to 1.6 parts by weight, based on a total of 100 parts by weight of the positive electrode active material for an all-solid-state battery comprising both the core and coating layer, such as 0.1 or more parts by weight, 0.2 or more parts by weight, 0.3 or more parts by weight, 0.4 or more parts by weight, 0.5 or more parts by weight, 0.6 or more parts by weight, 0.7 or more parts by weight, 0.8 or more parts by weight, or 0.9 or more parts by weight, and less than or equal to 1.6 parts by weight, less than or equal to 1.5 parts by weight, less than or equal to 1.4 parts by weight, less than or equal to 1.3 parts by weight, less than or equal to 1.2 parts by weight, or less than or equal to 1.1 parts by weight.

In one embodiment of the present invention, if the coating layers formed on the surface of the positive electrode active material for an all-solid-state battery are formed as a first coating layer and a second coating layer, respectively, in the direction from the center of the core to the surface of the positive electrode active material, wherein lithium carbon oxide represented by formula 1 is included in the first coating layer, the lithium carbon oxide represented by formula 1 may be included in an amount of 0.1 to 1.6 parts by weight, based on a total of 100 parts by weight of the positive electrode active material for an all-solid-state battery including the core and both the first coating layer and the second coating layer.

If the content of lithium carbon oxide represented by formula 1 is less than 0.1 parts by weight, there may be a problem that an intact coating layer cannot be formed, such as a partial coating on the surface of the positive electrode active material, and if it exceeds 1.6 parts by weight, there may be a problem that the gap between the positive electrode active material and the solid electrolyte becomes distant and the interfacial resistance increases, and therefore, the lithium carbon oxide represented by formula 1 is preferably included within the above range.

In one embodiment of the present invention, the lithium titanium oxide represented by Formula 2 may be comprised in an amount of 0.1 to 1.5 parts by weight, based on a total of 100 parts by weight of the positive electrode active material for an all-solid-state battery comprising both the core and coating layer, such as 0.1 or more parts by weight, 0.2 or more parts by weight, 0.3 or more parts by weight, 0.4 or more parts by weight, 0.5 or more parts by weight, 0.6 or more parts by weight, 0.7 or more parts by weight, 0.8 or more parts by weight, or 0.9 or more parts by weight, and less than or equal to 1.5 parts by weight, less than or equal to 1.4 parts by weight, less than or equal to 1.3 parts by weight, less than or equal to 1.2 parts by weight, or less than or equal to 1.1 parts by weight.

In one embodiment of the present invention, if the coating layers formed on the surface of the positive electrode active material for an all-solid-state battery are formed as a first coating layer and a second coating layer, respectively, in the direction from the center of the core to the surface of the positive electrode active material, wherein the lithium titanium oxide represented by Formula 2 is included in the second coating layer, the lithium titanium oxide represented by Formula 2 may be included in an amount of 0.1 to 1.5 parts by weight based on a total of 100 parts by weight of the positive electrode active material for an all-solid-state battery including the core and both the first coating layer and the second coating layer.

If the content of lithium titanium oxide represented by formula 2 is less than 0.1 parts by weight, there may be a problem that an intact coating layer cannot be formed, such as a partial coating on the surface of the positive electrode active material, and if it exceeds 1.5 parts by weight, there may be a problem that the gap between the positive electrode active material and the solid electrolyte becomes distant and the interfacial resistance increases, and therefore, the lithium titanium oxide represented by formula 2 is preferably included within the above range.

Furthermore, according to the present invention, lithium carbon oxide represented by formula 1 and lithium titanium oxide represented by formula 2 included in the coating layer of the positive electrode active material for an all-solid-state battery **are** included in a weight ratio of 95:5 to 25:75.

For example, the lithium carbon oxide represented by Formula 1 and the lithium titanium oxide represented by Formula 2 may have a weight ratio of 95:5, 16:1, 90:10, 85:15, 5:1, 80:20, 75:25, 70:30, 65:35, 60:40, 55:45, 50:50, 45:55, 40:60, 35:65, 30:70 or 25:75.

In the positive electrode active material for an all-solid-state battery according to the present invention, if the content range of lithium carbon oxide represented by formula 1 is less than 25 parts by weight based on a total of 100 parts by weight of lithium carbon oxide represented by formula 1 and lithium titanium oxide represented by formula 2, there may be a problem that the first coating layer including lithium carbon oxide is in direct contact with the solid electrolyte, and if it exceeds 95 parts by weight, there may be a problem that the lithium carbon oxide is incorporated into the second coating layer containing the lithium titanium oxide and a side reaction occurs, resulting in an increase in the interfacial resistance of the positive electrode active material and the solid electrolyte.

If the content range of lithium titanium oxide represented by formula 2 in the positive electrode active material for an all-solid-state battery according to the present invention is less than 5 parts by weight based on a total of 100 parts by weight of lithium carbon oxide represented by formula 1 and lithium titanium oxide represented by formula 2, there may be a problem that lithium carbon oxide is introduced into the second coating layer containing lithium titanium oxide and a side reaction occurs, resulting in an increase in the interfacial resistance of the positive electrode active material and the solid electrolyte, and if it exceeds 75 parts by weight, there may be a problem that the first coating layer containing lithium carbon oxide is in direct contact with the solid electrolyte.

In one embodiment of the present invention, the thickness ratio of the first coating layer and the second coating layer may be 20:80 to 80:20.

Further, within the range that the above thickness ratio is satisfied, the thickness of the first coating layer may be 0.001 to 0.02 µm, and the thickness of the second coating layer may be 0.001 to 0.02 µm.

In a positive electrode active material for an all-solid-state battery according to the present invention, when the first coating layer and the second coating layer formed on the surface have the above thickness ratio and thickness range, the side reaction of the positive electrode active material and the sulfide-based solid electrolyte can be substantially reduced and/or effectively minimized or effectively blocked.

The core included in the positive electrode active material for an all-solid-state battery is not particularly limited, provided that it is a lithium composite oxide-based material capable of reversible adsorption and release of lithium ions. For example, it may comprise one or more of the following metals: cobalt, manganese, nickel, iron, or a combination thereof; and a composite oxide of the above metal and lithium.

As a more specific example, a compound represented by any of the following formulae can be used as the positive electrode active material: LiₐA_{1-b}R_{b}D₂ (wherein 0.90 ≤ a ≤ 1.8 and 0 ≤ b ≤ 0.5); LiₐE_{1-b}RsO_{2-c}D_{c} (wherein 0.90 ≤ a ≤ 1.8, 0 ≤ b ≤ 0.5, and 0 ≤ c ≤ 0.05); LiE_{2-b}R_{b}O_{4-c}D_{c} (wherein 0 ≤ b ≤ 0.5, and 0 ≤ c ≤ 0.05); LiₐNi_{1-b-c}Co_{b}R_{c}D_{α} (wherein 0.90 ≤ a ≤ 1.8, 0 ≤ b ≤ 0.5, 0 ≤ c ≤ 0.05 and 0 < a ≤ 2); LiₐNi_{1-b-c}Co_{b}R_{c}O_{2-α}Z_{α} (wherein 0.90 ≤ a ≤ 1.8, 0 ≤ b ≤ 0.5, 0 ≤ c ≤ 0.05 and 0 < α < 2); LiₐNi_{1-b-c}Co_{b}R_{c}O_{2-α}Z₂ (wherein 0.90 ≤ a ≤ 1.8, 0 ≤ b ≤ 0.5, 0 ≤ c ≤ 0.05 and 0 < α < 2); LiₐNi_{1-b-c}Mn_{b}R_{c}D_{α} (wherein 0.90 ≤ a ≤ 1.8, 0 ≤ b ≤ 0.5, 0 ≤ c ≤ 0.05 and 0 < α ≤ 2); LiₐNi_{1-b-c}Mn_{b}R_{c}O_{2-α}Z_{α} (wherein 0.90 ≤ a ≤ 1.8, 0 ≤ b ≤ 0.5, 0 ≤ c ≤ 0.05 and 0 < α < 2); LiₐNi_{1-b-c}Mn_{b}R_{c}O_{2-α}Z₂ (wherein 0.90 ≤ a ≤ 1.8, 0 ≤ b ≤ 0.5, 0 ≤ c ≤ 0.05 and 0 < α < 2); LiₐNi_{b}E_{c}G_{d}O₂ (wherein 0.90 ≤ a ≤ 1.8, 0 ≤ b ≤ 0.9, 0 ≤ c ≤ 0.5 and 0.001 ≤ d ≤ 0.1); LiₐNi_{b}Co_{c}Mn_{d}GₑO₂ (wherein 0.90 ≤ a ≤ 1.8, 0 ≤ b ≤ 0.9, 0 ≤ c ≤ 0.5, 0 ≤ d ≤0.5 and 0 ≤ e ≤ 0.1); LiₐNiG_{b}O₂ (wherein 0.90 ≤ a ≤ 1.8 and 0.001 ≤ b ≤ 0.1); LiₐCoG_{b}O₂ (wherein 0.90 ≤ a ≤ 1.8 and 0.001 ≤ b ≤ 0.1); LiₐMnG_{b}O₂ (wherein 0.90 ≤ a ≤ 1.8 and 0.001 ≤ b ≤ 0.1); LiₐMn₂G_{b}O₄ (wherein 0.90 ≤ a ≤ 1.8 and 0.001 ≤ b ≤ 0.1); QO₂; QS₂; LiQS₂; V₂O₅; LiV₂O₅; LiTO₂; LiNiVO₄; Li_{(3-f)}J₂(PO₄)₃ (wherein 0 ≤ f ≤ 2); Li_{(3-f)}Fe₂(PO₄)₃ (wherein 0 ≤ f ≤ 2); and LiFePO₄.

In the above formulae, A is Ni, Co, Mn, or a combination thereof; R is Al, Ni, Co, Mn, Cr, Fe, Mg, Sr, V, a rare earth element, or a combination thereof; D is O, F, S, P, or a combination thereof; E is Co, Mn, or a combination thereof; Z is F, S, P or a combination thereof; G is Al, Cr, Mn, Fe, Mg, La, Ce, Sr, V or a combination thereof; Q is Ti, Mo, Mn or a combination thereof; T is Cr, V, Fe, Sc, Y or a combination thereof; J is V, Cr, Mn, Co, Ni, Cu or a combination thereof.

According to another aspect, there is provided a positive electrode for an all-solid-state battery comprising a positive electrode active material for an all-solid-state battery according to one embodiment of the present invention.

In one embodiment, the positive electrode for an all-solid-state battery may comprise a positive electrode active material for an all-solid-state battery as described above and a sulfide-based solid electrolyte.

Since the positive electrode active material for the all-solid-state battery has been described above, a detailed description of the positive electrode active material included in the positive electrode for an all-solid-state battery according to the present invention is omitted hereinafter.

In one embodiment of the present invention, the sulfide-based solid electrolyte included in the positive electrode for an all-solid-state battery may be represented by Formula 3 below:

[Formula 3] LiₖM²ₗSₘX²ₙ,

wherein M² is Sn, Mg, Ba, B, Al, Ga, In, Si, Ge, Pb, N, P, As, Sb, Bi, Ti, V, Cr, Mn, Fe, Co, Ni, Cu, Y, Zr, Nb, Mo, Tc, Ru, Rh, Pd, Ag, Hf, Ta, W or La, X² is F, Cl, Br, I, Se, Te or O, and 0<k≤6, 0<I≤6, 0<m≤6, and 0≤n≤6.

For example, in Formula 3, M² may be B, Si, Ge, P or N.

For example, in Formula 3, X² may be F, CI, Br, I or O.

For example, the sulfide-based solid electrolyte represented by Formula 3 may be at least one selected from the group consisting of Li₂S-P₂S₅, Li₂S-P₂S₅-LiX, wherein X is a halogen atom, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ, wherein m and n are positive numbers, and Z is any one of Ge, Zn and Ga, Li₂S-GeS₂, Li₂S-SiS₂-Li₃PO₄, Li₂S-SiS₂-LiₚMO_{q}, wherein p and q are positive numbers, and M is any one of P, Si, Ge, B, Al, Ga and In, Li₇₋ₓPS₆₋ₓClₓ, wherein 0≤x≤2, Li₇₋ₓPS₆₋ₓBrₓ, wherein 0≤x≤2, and Li₇₋ₓPS₆₋ₓIₓ, wherein 0≤x≤2.

Further, the sulfide-based solid electrolyte may preferably be an argyrodite-type solid electrolyte comprising one or more selected from the group consisting of Li₆PS₅Cl, Li₆PS₅Br and Li₆PS₅I.

In one embodiment of the present invention, the positive electrode for an all-solid-state battery may further comprise a conductive material and a binder.

The conductive material is not particularly limited as long as it is conductive without causing any chemical changes in the battery, for example, graphite such as natural or artificial graphite; carbon black such as carbon black, acetylene black, ketjen black, channel black, furnace black, lamp black or thermal black; conductive fibers such as carbon fibers or metal fibers; metal powders such as carbon fluoride, aluminum or nickel powder; conductive whiskers such as zinc oxide or potassium titanate; conductive metal oxides such as titanium oxide; or conductive materials such as polyphenylene derivatives may be used. The conductive material may be comprised in an amount of about 0.01 to 10 parts by weight, or 0.01 to 5 parts by weight, or 0.01 to 3 parts by weight, based on a total of 100 parts by weight of the positive electrode.

The binder is a component added in consideration of the adhesion of the positive electrode active material, the sulfide-based solid electrolyte, and the conductive material to the positive electrode for an all-solid-state battery, and any polymeric binder known to be available for electrode formation in the technical field in the art can be used without any particular limitation.

Examples of such polymeric binders may include acrylic-based binders, polyvinylidene fluoride (PVDF)-based binders, polytetrafluoroethylene (PTFE)-based binders, or butadiene rubber-based binders such as nitrile butadiene rubber (NBR), and various other polymeric binders may be used. The binder may be comprised in an amount of about 0.01 to 10 parts by weight, or 0.01 to 5 parts by weight, or 0.01 to 3 parts by weight, based on a total of 100 parts by weight of the positive electrode.

A positive electrode for an all-solid-state battery according to one embodiment of the present invention may comprise a current collector and a positive electrode active material layer formed on at least one side of the current collector, wherein the positive electrode active material layer may comprise any of the positive electrode active material described above, a sulfide-based solid electrolyte, a conductive material, and a binder.

The positive electrode can be manufactured according to methods well known in the art, and although the methods are not limited to a particular manufacturing method, it can be manufactured by, for example, mixing the positive electrode active material, a sulfide-based solid electrolyte, a conductive material, and a binder in a solvent to form a positive electrode compound on the slurry, and applying the positive electrode compound to the positive electrode current collector.

The positive electrode current collector is typically made with a thickness of 3 to 500 µm. Such positive electrode current collectors are not particularly limited as long as they have a high conductivity without causing any chemical changes in the battery, for example, stainless steel, aluminum, nickel, titanium, calcined carbon, or aluminum or stainless steel whose surface is treated with carbon, nickel, titanium, or silver may be used. The current collector may also have microscopic irregularities formed on its surface to increase the adhesion of the positive electrode active material, and may be in the various forms of a film, sheet, foil, net, porous material, foam, or nonwoven material.

In addition to the positive electrode active material, sulfide-based solid electrolyte, conductive material, and binder described above, the positive electrode may further comprise additives such as fillers, coatings, dispersants, or ionic conductivity aids. As the fillers, coatings, dispersants, or ionic conductivity aids, materials commonly used in the art for electrodes of all-solid-state secondary batteries can be used.

The thickness of the positive electrode may be, for example, 70 to 150 µm.

Another embodiment of the present invention provides an all-solid-state battery comprising a positive electrode, a negative electrode, and a solid electrolyte layer disposed between the positive electrode and the negative electrode, wherein the positive electrode is the positive electrode for an all-solid-state battery as described above.

Since the positive electrode included in the all-solid-state battery has been described in detail above, the negative electrode and solid electrolyte included in the all-solid-state battery are described in detail below.

The solid electrolyte layer disposed between the positive electrode and negative electrode may include, for example, a sulfide-based solid electrolyte. The sulfide-based solid electrolyte may be the same as or different from the sulfide-based solid electrolyte included in the positive electrode.

For specific information on sulfide-based solid electrolyte, see the positive electrode section above.

The elastic modulus, or Young's modulus, of the solid electrolyte is, for example, 35 GPa or less, 30 GPa or less, 27 GPa or less, 25 GPa or less, 23 GPa or less. The elastic modulus, or Young's modulus, of the solid electrolyte is, for example, 10 to 35 GPa, 15 to 35 GPa, 15 to 30 GPa, or 15 to 25 GPa. Due to the solid electrolyte having an elastic modulus in this range, pressing and/or sintering of the solid electrolyte is more easily accomplished.

The solid electrolyte layer further comprises, for example, a binder. The binder included in the solid electrolyte layer can be, for example, styrene butadiene rubber (SBR), polytetrafluoroethylene, polyvinylidene fluoride, polyethylene, or the like, but is not limited thereto, and any binder used in the art as a binder can be used. The binder of the solid electrolyte layer may be the same or different from the binder of the positive electrode active material layer and the negative electrode active material layer.

Next, the negative electrode of an all-solid-state battery may include a negative electrode current collector and a negative electrode active material layer.

The thickness of the negative electrode active material layer is, for example, 50% or less, 40% or less, 30% or less, 20% or less, 10% or less, or 5% or less of the thickness of the positive electrode active material layer. The thickness of the negative electrode active material layer is, for example, 1 µm to 20 µm, 2 µm to 10 µm, or 3 µm to 7 µm. If the thickness of the negative electrode active material layer is too thin, the lithium dendrite formed between the negative electrode active material layer and the negative electrode current collector may collapse the negative electrode active material layer, making it difficult to improve the cycle characteristics of the all-solid-state battery. If the thickness of the negative electrode active material layer is increased too much, the energy density of the all-solid-state battery decreases and the internal resistance of the all-solid-state battery increases due to the negative electrode active material layer, making it difficult to improve the cycle characteristics of the all-solid-state battery.

The negative electrode active material layer includes, for example, a negative electrode active material that forms an alloy or compound with lithium.

The negative electrode active material comprised in the negative electrode active material layer has, for example, a particle shape. The particulate negative electrode active material has an average particle size of, for example, 4 µm or less, 3 µm or less, 2 µm or less, 1 µm or less, or 900 nm or less. The average particle size of the negative electrode active material is, for example, 10 nm to 4 µm, 10 nm to 3 µm, 10 nm to 2 µm, 10 nm to 1 µm, or 10 nm to 900 nm. The negative electrode active material may have an average particle size in this range to facilitate reversible absorption and/or desorption of lithium during charge and discharge. The average particle size of the negative electrode active material is, for example, a volume equivalent median diameter (D50) measured using a laser particle size distribution meter.

The negative electrode active material comprised in the negative electrode active material layer includes, for example, one or more selected from a carbon-based negative electrode active material and a metallic or semi-metallic negative electrode active material.

The carbon-based negative electrode active material is in particular amorphous carbon. Amorphous carbon is, for example, carbon black (CB), acetylene black (AB), furnace black (FB), ketjen black (KB), or graphene, but is not necessarily limited thereto, and can be any carbon classified as amorphous in the art. Amorphous carbons are carbons that are not crystalline or have very low crystallinity, as distinguished from crystalline or graphitic carbons.

Metallic or semi-metallic negative electrode active materials include one or more selected from the group consisting of, but is not necessarily limited to, gold (Au), platinum (Pt), palladium (Pd), silicon (Si), silver (Ag), aluminum (Al), bismuth (Bi), tin (Sn), and zinc (Zn), as long as it can be used as the metallic negative electrode active material or semi-metallic negative electrode active material that forms an alloy or compound with lithium in the art. For example, nickel (Ni) is not a metallic negative electrode active material because it does not form an alloy with lithium.

The negative electrode active material layer may comprise one type of negative electrode active material, or a mixture of a plurality of different negative electrode active materials. For example, the negative electrode active material layer may comprise only amorphous carbon, or may comprise one or more selected from the group consisting of gold (Au), platinum (Pt), palladium (Pd), silicon (Si), silver (Ag), aluminum (Al), bismuth (Bi), tin (Sn), and zinc (Zn). Alternatively, the negative electrode active material layer comprises a mixture of amorphous carbon with one or more of gold (Au), platinum (Pt), palladium (Pd), silicon (Si), silver (Ag), aluminum (Al), bismuth (Bi), tin (Sn), and zinc (Zn). The mixing ratio of amorphous carbon to silver (Ag) or the like, for example, is 10:1 to 1:2, 5:1 to 1:1, or 4:1 to 2:1 as a weight ratio, but is not necessarily limited thereto, and is selected based on the required characteristics of the all-solid-state battery. By having this composition of the negative electrode active material, the cycle characteristics of the all-solid-state cell are further improved.

The negative electrode active material comprised in the negative electrode active material layer includes, for example, a mixture of primary particles comprising amorphous carbon and secondary particles consisting of metal or semi-metal. Metals or semi-metals include, for example, gold (Au), platinum (Pt), palladium (Pd), silicon (Si), silver (Ag), aluminum (Al), bismuth (Bi), tin (Sn), and zinc (Zn). A semi-metal is otherwise a semiconductor. The content of the secondary particle is 8% to 60% by weight, 10% to 50% by weight, 15% to 40% by weight, or 20% to 30% by weight, based on the total weight of the mixture. By having a content of the secondary particle in this range, the cycle characteristics of, for example, an all-solid-state battery are further improved.

The negative electrode active material layer comprises, for example, a binder. The binder may be, for example, but not necessarily limited to, styrene-butadiene rubber (SBR), polytetrafluoroethylene, polyvinylidene fluoride, polyethylene, vinylidene fluoride/hexafluoropropylene copolymer, polyacrylonitrile, polymethylmethacrylate, or any other binder known in the art. The binder may consist of a single binder or a plurality of different binders.

By including a binder in the negative electrode active material layer, the negative electrode active material layer is stabilized on the negative electrode current collector. Furthermore, cracking of the negative electrode active material layer is inhibited despite changes in the volume and/or relative position of the negative electrode active material layer during charge and discharge. For example, if the negative electrode active material layer does not include a binder, the negative electrode active material layer can be easily separated from the negative electrode current collector. In a portion where the negative electrode active material layer is separated from the negative electrode current collector, the negative electrode current collector is exposed and in contact with the solid electrolyte layer, increasing the likelihood of a short circuit occurring. The negative electrode active material layer is produced, for example, by applying a slurry where materials that constitute the negative electrode active material layer is dispersed to the negative electrode current collector and drying it. By including a binder in the negative electrode active material layer, a stable dispersion of the negative electrode active material in the slurry is achieved. For example, when the slurry is applied to the negative electrode current collector by screen printing, it is possible to prevent clogging of the screen (e.g., clogging by agglomerates of the negative electrode active material).

The negative electrode current collector consists of, for example, a material that does not react with lithium, i.e. a material that does not form both alloys and compounds. The materials constituting the negative electrode current collector are, for example, copper (Cu), stainless steel, titanium (Ti), iron (Fe), cobalt (Co), or nickel (Ni), but are not necessarily limited thereto, and are any materials commonly used in the art as an electrode current collector. The negative electrode current collector may consist of one of the metals described above, or may consist of an alloy or coating material of two or more metals. The negative electrode current collector may be, for example, in the form of a plate or foil.

The negative electrode active material layer can further comprise conventional additives used in all-solid-state batteries, such as fillers, dispersants, ionic conductors, and the like.

An all-solid-state battery may be manufactured, for example, by fabricating a positive electrode, a negative electrode, and a solid electrolyte layer, and then stacking these layers.

The present invention provides a battery module including the all-solid-state battery as a unit cell, a battery pack including the battery module, and a device including the battery pack as a power source.

Specific examples of such devices include, but are not limited to, a power tool powered by an electric motor; an electric vehicle, including an electric vehicle (EV), a hybrid electric vehicle (HEV), or a plug-in hybrid electric vehicle (PHEV); an electric two-wheeled vehicle, including an electric bicycle (E-bike) and an electric scooter; an electric golf cart; and a power storage system.

### [Mode for Practicing the Invention]

Specific examples of the present invention are set forth below. However, the examples described below are intended only to specifically illustrate or describe the present invention, and are not intended to limit the present invention. In addition, matters not described herein are sufficiently inferred by those skilled in the art and are omitted herein.

### Preparation Example 1: Fabrication of positive electrode active material for an all-solid-state battery

(1) Li₂CO₃ and Ni_{0.8}Co_{0.1}Mn_{0.1}(OH)₂ were mixed with a mixer in a weight ratio of 1.1:1 to form a reaction mixture, and then the reaction mixture was placed in a stainless steel crucible and subjected to primary heat treatment at 600 °C, under atmospheric atmosphere for 6 hours to form a plasticized mixture, and then cooled. Then, it was decomposed, and sieved, and the decomposed plasticized mixture was put into an aluminum crucible and subjected to a secondary heat treatment at 800 °C, under atmospheric atmosphere for 10 hours to prepare a positive electrode active material.
(2) The positive electrode active material prepared in step (1) was loaded into a tube furnace having an inner diameter of 50 mm and a length of 1,000 mm, and then heat treated at 700 °C to prepare a positive electrode active material having a first coating layer comprising lithium carbon oxide, Li₂CO₃, in an amount of 0.5 parts by weight relative to the total weight of the positive electrode active material.
(3) Next, titanium(IV) isopropoxide and lithium ethoxide as precursors of lithium titanium oxide were added in stoichiometric proportions and dissolved in ethanol to prepare a Li₄Ti₅O₁₂ solution. The positive electrode active material on which the first coating layer prepared in step (2) was formed was added to the Li₄Ti₅O₁₂ solution to prepare a mixed solution. The mixed solution was mixed for 24 hours using a Lab Blender (manufactured by Waring), vacuum dried to remove ethanol as a solvent, loaded into a tube furnace having an inner diameter of 50 mm and a length of 1,000 mm, and heat treated at 400 °C for 4 hours to prepare a positive electrode active material for an all-solid-state battery having a second coating layer comprising Li₄Ti₅O₁₂, lithium titanium oxide, in an amount of 0.1 parts by weight relative to the total weight of the positive electrode active material.

### Preparation Example 2: Fabrication of positive electrode active material for an all-solid-state battery

The positive electrode active material for an all-solid-state battery was prepared as in Preparation Example 1, except that a second coating layer comprising lithium titanium oxide, Li₄Ti₅O₁₂, was formed in an amount of 1.5 parts by weight relative to the total weight of the positive electrode active material.

### Preparation Example 3: Fabrication of positive electrode active material for an all-solid-state battery

The positive electrode active material for an all-solid-state battery was prepared as in Preparation Example 1, except that a primary heat treatment at 650 °C was performed to form a first coating layer comprising lithium carbon oxide, Li₂CO₃, in an amount of 0.1 parts by weight relative to the total weight of the positive electrode active material in step (1) of Preparation Example 1.

### Preparation Example 4: Fabrication of positive electrode active material for an all-solid-state battery

The positive electrode active material for the all-solid-state battery was prepared as in Preparation Example 1, except that a primary heat treatment at 700 °C was performed to form a first coating layer comprising lithium carbon oxide, Li₂CO₃, in an amount of 1.6 parts by weight relative to the total weight of the positive electrode active material in step (1) of Preparation Example 1.

### Comparative Preparation Example 1: Preparation of positive electrode active material for an all-solid-state battery

(1) Li₂CO₃ and Ni_{0.8}Co_{0.1}Mn_{0.1}(OH)₂ were mixed with a mixer in a weight ratio of 1.1:1 to form a reaction mixture, and then the reaction mixture was placed in a stainless steel crucible and subjected to primary heat treatment at 600 °C, under atmospheric atmosphere for 5 hours to form a plasticized mixture, and then cooled. Then, it was decomposed, and sieved, and the decomposed plasticized mixture was placed in an aluminum crucible and subjected to a secondary heat treatment at 800 °C, under atmospheric atmosphere for 10 hours to prepare a positive electrode active material. The prepared positive electrode active material was loaded into a tube furnace with an inner diameter of 50 mm and a length of 1,000 mm, and then heat treated at 700 °C to completely remove lithium carbon oxide, Li₂CO₃.
(2) Next, titanium(IV) isopropoxide and lithium ethoxide as precursors of lithium titanium oxide were added in stoichiometric proportions and dissolved in ethanol to prepare a Li₄Ti₅O₁₂ solution. The positive electrode active material prepared in step (1) was added to the Li₄Ti₅O₁₂ solution to prepare a mixed solution. The mixed solution was mixed for 24 hours using a Lab Blender (manufactured by Waring), and the solution was vacuum dried to remove ethanol, a solvent, and loaded into a tube furnace having an inner diameter of 50 mm and a length of 1,000 mm, and heat treated at 400 °C for 4 hours to prepare a positive electrode active material for an all-solid-state battery having only a coating layer comprising Li₄Ti₅O₁₂ in an amount of 0.1 parts by weight relative to the total weight of the positive electrode active material.

### Comparative Preparation Example 2: Preparation of positive electrode active material for an all-solid-state battery

(1) Li₂CO₃ and Ni_{0.8}Co_{0.1}Mn_{0.1}(OH)₂ were mixed with a mixer in a weight ratio of 1.1:1 to form a reaction mixture, and the reaction mixture was placed in a stainless steel crucible and subjected to a primary heat treatment at 600 °C, under atmospheric atmosphere for 5 hours to form a plasticized mixture, and then cooled. Then, it was decomposed, and sieved, and the decomposed plasticized mixture was put into an aluminum crucible and subjected to a secondary heat treatment at 800 °C, under atmospheric atmosphere for 10 hours to prepare a positive electrode active material.
(2) The positive electrode active material prepared in step (1) was loaded into a tube furnace having an inner diameter of 50 mm and a length of 1,000 mm, and then heat treated at 700 °C to prepare a positive electrode active material for an all-solid-state battery in which only a coating layer containing lithium carbon oxide, Li₂CO₃, in an amount of 0.5 parts by weight based on the total weight of the positive electrode active material, was formed.

### Comparative Preparation Example 3: Preparation of positive electrode active material for an all-solid-state battery

The positive electrode active material for an all-solid-state battery was prepared as in Preparation Example 1, except that a second coating layer comprising lithium titanium oxide, Li₄Ti₅O₁₂, in an amount of 0.01 parts by weight, based on the total weight of the positive electrode active material, was formed.

### Comparative Preparation Example 4: Preparation of positive electrode active material for an all-solid-state battery

The positive electrode active material for an all-solid-state battery was prepared as in Preparation Example 1, except that a second coating layer comprising lithium titanium oxide, Li₄Ti₅O₁₂, in an amount of 2.0 parts by weight relative to the total weight of the positive electrode active material, was formed.

### Comparative Preparation Example 5: Preparation of positive electrode active material for an all-solid-state battery

The positive electrode active material for an all-solid-state battery was prepared as in Preparation Example 1, except that a first coating layer comprising lithium carbon oxide, Li₂CO₃, in an amount of 2.0 parts by weight relative to the total weight of the positive electrode active material, was formed.

### Comparative Preparation Example 6: Preparation of positive electrode active material for an all-solid-state battery

(1) A positive electrode active material for an all-solid-state battery was prepared as in Comparative Preparation Example 1, with a first coating layer comprising lithium titanium oxide, Li₄Ti₅O₁₂, in an amount of 0.1 parts by weight relative to the total weight of the positive electrode active material.
(2) Li₂CO₃ was added to ethanol to prepare a Li₂CO₃ solution, and the positive electrode active material prepared in step (1) was added to the above solution to prepare a mixed solution. This was vacuum dried and the solvent, ethanol, was removed to prepare a positive electrode active material for an all-solid-state battery having a second coating layer comprising lithium carbon oxide, Li₂CO₃, in an amount of 0.5 parts by weight relative to the total weight of the positive electrode active material.

### Example 1: Fabrication of positive electrode for an all-solid-state battery

(1) 78 parts by weight of the positive electrode active material prepared in Preparation Example 1, 19.5 parts by weight of Li₆PS₅Cl as a sulfide-based solid electrolyte, 1.5 parts by weight of Vapor grown carbon nanofibers (VGCF^{™}-H, manufactured by Showa Denko) as a conductive material, and 1 part by weight of polytetrafluoroethylene (PTFE) as a binder were placed in a container and mixed for 1 minute at 5,000 rpm using a Lab Blender (manufactured by Waring) without using a separate solvent. Next, a shear force of 100 N was applied to the above mixture and high shear mixing (PBV-0.1L, manufactured by Irie Shokai) was performed to prepare a positive electrode slurry.
(2) The prepared positive electrode slurry was prepared as a freestanding film using a two roll mill MR-3 (manufactured by Inoue). The film was then placed on one surface of an aluminum current collector with a thickness of 15 µm and pressed to produce a positive electrode for an all-solid-state battery.

### Examples 2 to 4: Fabrication of positive electrodes for all-solid-state batteries

Positive electrodes for an all-solid-state battery according to Examples 2 to 4 were prepared by following the same procedure as in Example 1, except that the positive electrode active materials prepared in Preparation Examples 2 to 4 were used instead of the positive electrode active material prepared in Preparation Example 1, respectively.

### Comparative Examples 1 to 6: Fabrication of positive electrodes for all-solid-state batteries

Positive electrodes for an all-solid-state battery according to Comparative Examples 1 to 6 were prepared by following the same procedure as in Example 1, except that the positive electrode active materials prepared in Comparative Preparation Examples 1 to 6 were used instead of the positive electrode active materials prepared in Preparation Example 1, respectively.

### Experimental Example 1: Energy dispersive X-ray spectroscopy (EDX) analysis of positive electrode active material for an all-solid-state battery

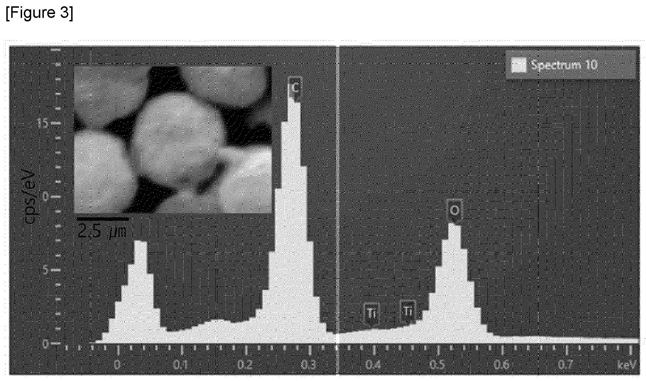

An EDX (energy dispersive X-ray spectroscopy) experiment was performed to determine the composition of the oxides contained in the positive electrode active material coating layer for an all-solid-state battery prepared according to Preparation Example 1, and the results are shown in FIG. 3. The EDX measurement device was a JSM7900F from JEOL.

As shown in FIG. 3, in the case of the positive electrode active material for an all-solid-state battery prepared according to Preparation Example 1, it was found that the coating layer formed on the surface of the positive electrode active material contained both carbon and titanium elements.

### Experimental Example 2: Evaluation of initial discharge capacity and life characteristics

Initial discharge capacity and lifetime characteristics for all-solid-state batteries comprising positive electrodes according to Examples 1 to 4 and Comparative Examples 1 to 6 were evaluated.

The all-solid-state batteries used lithium metal with a thickness of 40 µm as the negative electrode, and a Li₆PS₅Cl solid electrolyte film with a thickness of 50 µm was interposed between the positive electrode manufactured in any of Examples 1 to 4, and Comparative Examples 1 to 6 and the negative electrode, and pressurized to a pressure of 500 MPa, and was manufactured in the form of a jig cell having a capacity of 5 mAh/cm² with a driving pressure of 3 MPa.

### (1) Evaluation of the initial discharge capacity of all-solid-state batteries

For the all-solid-state batteries comprising the positive electrode according to Examples 1 to 4 and Comparative Examples 1 to 6, the charge and discharge characteristics were evaluated by the following charge and discharge tests.

It was charged at a C-rate of 0.1C until the voltage reached 4.25V (vs. Li), then cut-off at a rate of 0.05C while maintaining 4.25V (vs. Li). The battery was then discharged at a C-rate of 0.1C until the voltage reached 3.0V (vs. Li) when discharging (1^{st} cycle). The results are shown in Table 1 below.

Referring to Table 1, it can be seen that the all-solid-state batteries according to Examples 1 to 4 exhibit higher reversible capacity and energy density compared to the all-solid-state batteries according to Comparative Examples 1 to 6. In particular, it can be seen that when the positive electrode active material does not include a first coating layer (Comparative Example 1) or when the content of lithium carbon oxide included in the first coating layer exceeds a certain range (Comparative Example 5), the reversible capacity and energy density are significantly reduced compared to the all-solid-state batteries according to Examples.

### (2) Evaluation of the life characteristics of all-solid-state batteries

For the all-solid-state batteries comprising the positive electrodes according to Examples 1 to 4 and Comparative Examples 1 to 6, the life characteristics were evaluated by the following charge and discharge tests.

It was charged at a C-rate of 0.1C until the voltage reached 4.25V (vs. Li), then cut-off at a rate of 0.05C while maintaining 4.25V (vs. Li). The battery was then discharged at a rate (C-rate) of 0.1C until the voltage was 3.0V (vs. Li) when discharging (1^{st} cycle). The above charge and discharge test was repeated for 50 cycles to measure the capacity retention rate of the discharge capacity, and the results are shown in Table 1 below.

Referring to Table 1, it can be seen that the all-solid-state batteries comprising positive electrodes according to Examples 1 to 4 have significantly improved life characteristics compared to the all-solid-state batteries comprising positive electrodes according to Comparative Examples 1 to 6. This is predicted to be due to the fact that the positive electrode according to Examples includes a positive electrode active material comprising a first coating layer comprising lithium carbon oxide and a second coating layer comprising lithium titanium oxide, so that the interfacial resistance between the sulfide-based solid electrolyte in the positive electrode active material layer is reduced and the side reaction is suppressed.

**[Table 1]**

| | Coating layer composition in positive electrode active material | | 0.1C Initial capacity (mAh) | Capacity retention at 0.1C 50^{th} cycle (%) |
|---|---|---|---|---|
| | Li₂CO₃ content of the first coating layer (parts by weight) | Li₄Ti₅O₁₂ content of the second coating layer (parts by weight) | | |
| Example 1 | 0.5 | 0.1 | 5.1 | 94.9 |
| Example 2 | 0.5 | 1.5 | 4.9 | 96.1 |
| Example 3 | 0.1 | 0.1 | 4.9 | 94.8 |
| Example 4 | 1.6 | 0.1 | 5.0 | 95.0 |
| Example 5 | 0.7 | 1.0 | 5.0 | 98.2 |
| Comparative Example 1 | - | 0.1 | 3.2 | 54.0 |
| Comparative Example 2 | 0.5 | - | 4.8 | 81.2 |
| Comparative Example 3 | 0.5 | 0.01 | 4.9 | 85.5 |
| Comparative Example 4 | 0.5 | 2 | 4.3 | 80.2 |
| Comparative Example 5 | 2 | 0.1 | 3.1 | 47.3 |
| Comparative Example 6 | Li₄Ti₅O₁₂ content in the first coating layer : 0.1 | Li₂CO₃ content in the second coating layer : 0.5 | 2.6 | 16.7 |

Although the preferred examples of the present invention have been described in detail above, the scope of the present invention is not limited thereto, and various modifications and improvements by those skilled in the art utilizing the basic concepts of the present invention as defined in the following claims are also within the scope of the present invention.

### [Reference numerals]

- 1:: Positive electrode active material core
- 3:: Positive electrode active material coating layer
- 5:: Positive electrode active material first coating layer
- 7:: Positive electrode active material second coating layer
- 10:: Positive electrode active material for an all-solid-state battery
- 20:: Positive electrode active material for an all-solid-state battery

## Claims

1. A positive electrode active material for an all-solid-state battery, comprising:
a core comprising a lithium composite oxide capable of reversible adsorption and release of lithium ions;
and a coating layer formed on a surface of the core,
wherein the coating layer comprises lithium carbon oxide represented by Formula 1 below and lithium titanium oxide represented by Formula 2 below:
[Formula 1] LiₐCO_{b} ,
wherein a is 0<a≤4 and b is 0<b≤4;
[Formula 2] LiₓTi_{y}O₄
,
wherein x is 0.8≤x≤1.4 and y is 1.6≤y≤2.2, and
wherein the coating layer includes a first coating layer and a second coating layer, respectively, in the direction from a center of the core toward a surface of the core,
wherein the first coating layer comprises lithium carbon oxide represented by Formula 1,
wherein the second coating layer comprises lithium titanium oxide represented by formula 2, and
wherein the lithium carbon oxide represented by Formula 1 and the lithium titanium oxide represented by Formula 2 are included in the coating layer in a weight ratio of 95:5 to 25:75.

2. The positive electrode active material for an all-solid-state battery according to claim 1,
wherein the coating layer is comprised in an amount of 0.1 to 10 parts by weight, based on a total of 100 parts by weight of the positive electrode active material for an all-solid-state battery comprising both the core and the coating layer.

3. The positive electrode active material for an all-solid-state battery according to claim 1,
wherein the lithium carbon oxide represented by Formula 1 is comprised in an amount of 0.1 to 1.6 parts by weight, based on a total of 100 parts by weight of the positive electrode active material for an all-solid-state battery comprising both the core and coating layer.

4. The positive electrode active material for an all-solid-state battery according to claim 1,
wherein the lithium titanium oxide represented by Formula 2 is comprised in an amount of 0.1 to 1.5 parts by weight, based on a total of 100 parts by weight of the positive electrode active material for an all-solid-state battery comprising both the core and coating layer.

5. The positive electrode active material for an all-solid-state battery according to claim 1,
wherein the thickness ratio of the first coating layer and the second coating layer is 20:80 to 80:20.

6. The positive electrode active material for an all-solid-state battery according to claim 1,
wherein the first coating layer has a thickness of 0.001 to 0.02 µm,
wherein the second coating layer has a thickness of 0.001 to 0.02 µm.

7. The positive electrode active material for an all-solid-state battery according to claim 1,
wherein the lithium carbon oxide is Li₂CO₃,
wherein the lithium titanium oxide is Li₄Ti₅O₁₂.

8. A positive electrode for an all-solid-state battery comprising:
a positive electrode active material for an all-solid-state battery according to any one of claims 1 to 7; and a sulfide-based solid electrolyte.

9. The positive electrode for an all-solid-state battery according to claim 8,
wherein the sulfide-based solid electrolyte is at least one selected from the group consisting of Li₂S-P₂S₅, Li₂S-P₂S₅-LiX (wherein X is a halogen atom), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂₋P₂S₅-LiI, Li₂S-B₂S₃, Li₂S-P₂S₅-ZₘSₙ (wherein m and n are positive numbers, and Z is any one of Ge, Zn and Ga), Li₂S-GeS₂, Li₂S-SiS₂-Li₃PO₄, Li₂S-SiS₂-LiₚMO_{q} (wherein p and q are positive numbers, and M is any one of P, Si, Ge, B, Al, Ga and In), Li₇₋ₓPS₆₋ₓClₓ (wherein 0≤x≤2), Li₇₋ₓPS₆₋ₓBrₓ (wherein 0≤x≤2), and Li₇₋ₓPS₆₋ₓIₓ (wherein 0≤x≤2).

10. The positive electrode for an all-solid-state battery according to claim 8,
wherein the sulfide-based solid electrolyte is an argyrodite-type solid electrolyte comprising one or more selected from the group consisting of Li₆PS₅Cl, Li₆PS₅Br and Li₆PS₅I.

11. An all-solid-state battery comprising:
a positive electrode;
a negative electrode;
and a solid electrolyte layer disposed between the positive electrode and negative electrode,
wherein the positive electrode comprises a positive electrode for an all-solid-state battery according to claim 8.

## Patentansprüche

1. Positivelektrodenaktivmaterial für eine Festkörperbatterie, umfassend:
einen Kern, der ein Lithiumverbundoxid umfasst, das zur reversiblen Adsorption und Freisetzung von Lithiumionen fähig ist;
und eine Beschichtungsschicht, die auf einer Oberfläche des Kerns gebildet ist,
wobei die Beschichtungsschicht Lithiumkohlenstoffoxid, das durch Formel 1 unten dargestellt ist, und Lithiumtitanoxid, das durch Formel 2 unten dargestellt ist, umfasst:
[Formel 1] LiₐCO_{b} ,
wobei a 0<a≤4 ist und b 0<b≤4 ist;
[Formel 2] LiₓTi_{y}O₄ ,
wobei x 0,8≤x≤1,4 ist und y 1,6≤y≤2,2 ist, und
wobei die Beschichtungsschicht eine erste Beschichtungsschicht bzw. eine zweite Beschichtungsschicht in der Richtung von einer Mitte des Kerns zu einer Oberfläche des Kerns beinhaltet,
wobei die erste Beschichtungsschicht Lithiumkohlenstoffoxid, das durch Formel 1 dargestellt ist, umfasst,
wobei die zweite Beschichtungsschicht Lithiumtitanoxid, das durch Formel 2 dargestellt ist, umfasst, und
wobei das Lithiumkohlenstoffoxid, das durch Formel 1 dargestellt ist, und das Lithiumtitanoxid, das durch Formel 2 dargestellt ist, in der Beschichtungsschicht in einem Gewichtsverhältnis von 95:5 bis 25:75 beinhaltet sind.

2. Positivelektrodenaktivmaterial für eine Festkörperbatterie nach Anspruch 1,
wobei die Beschichtungsschicht in einer Menge von 0,1 bis 10 Gewichtsteilen, bezogen auf insgesamt 100 Gewichtsteile des Positivelektrodenaktivmaterials für eine Festkörperbatterie, die sowohl den Kern als auch die Beschichtungsschicht umfasst, enthalten ist.

3. Positivelektrodenaktivmaterial für eine Festkörperbatterie nach Anspruch 1,
wobei das Lithiumkohlenstoffoxid, das durch Formel 1 dargestellt ist, in einer Menge von 0,1 bis 1,6 Gewichtsteilen, bezogen auf insgesamt 100 Gewichtsteile des Positivelektrodenaktivmaterials für eine Festkörperbatterie, die sowohl den Kern als auch die Beschichtungsschicht umfasst, enthalten ist.

4. Positivelektrodenaktivmaterial für eine Festkörperbatterie nach Anspruch 1,
wobei das Lithiumtitanoxid, das durch Formel 2 dargestellt ist, in einer Menge von 0,1 bis 1,5 Gewichtsteilen, bezogen auf insgesamt 100 Gewichtsteile des Positivelektrodenaktivmaterials für eine Festkörperbatterie, die sowohl den Kern als auch die Beschichtungsschicht umfasst, enthalten ist.

5. Positivelektrodenaktivmaterial für eine Festkörperbatterie nach Anspruch 1,
wobei das Dickenverhältnis der ersten Beschichtungsschicht und der zweiten Beschichtungsschicht 20:80 bis 80:20 beträgt.

6. Positivelektrodenaktivmaterial für eine Festkörperbatterie nach Anspruch 1,
wobei die erste Beschichtungsschicht eine Dicke von 0,001 bis 0,02 µm aufweist, wobei die zweite Beschichtungsschicht eine Dicke von 0,001 bis 0,02 µm aufweist.

7. Positivelektrodenaktivmaterial für eine Festkörperbatterie nach Anspruch 1,
wobei das Lithiumkohlenstoffoxid Li₂CO₃ ist,
wobei das Lithiumtitanoxid Li₄Ti₅O₁₂ ist.

8. Positivelektrode für eine Festkörperbatterie, umfassend:
ein Positivelektrodenaktivmaterial für eine Festkörperbatterie nach einem der Ansprüche 1 bis 7; und einen Festelektrolyten auf Sulfidbasis.

9. Positivelektrode für eine Festkörperbatterie nach Anspruch 8,
wobei der Festelektrolyt auf Sulfidbasis mindestens einer ist, ausgewählt aus der Gruppe bestehend aus Li₂S-P₂S₅, Li₂S-P₂S₅-LiX (wobei X ein Halogenatom ist), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (wobei m und n positive Zahlen sind und Z eines von Ge, Zn und Ga ist), Li₂S-GeS₂, Li₂S-SiS₂-Li₃PO₄, Li₂S-SiS₂-LiₚMO_{q} (wobei p und q positive Zahlen sind und M eines von P, Si, Ge, B, Al, Ga und In ist), Li₇₋ₓPS₆₋ₓClₓ (wobei 0≤x≤2), Li₇₋ₓPS₆₋ₓBrₓ (wobei 0≤x≤2) und Li₇₋ₓPS₆₋ₓIₓ (wobei 0≤x≤2).

10. Positivelektrode für eine Festkörperbatterie nach Anspruch 8,
wobei der Festelektrolyt auf Sulfidbasis ein Festelektrolyt vom Argyrodit-Typ ist, umfassend einen oder mehrere, ausgewählt aus der Gruppe bestehend aus Li₆PS₅Cl, Li₆PS₅Br und Li₆PS₅I.

11. Festkörperbatterie, umfassend:
eine Positivelektrode;
eine Negativelektrode;
und eine Festelektrolytschicht, die zwischen der Positivelektrode und der Negativelektrode angeordnet ist,
wobei die Positivelektrode eine Positivelektrode für eine Festkörperbatterie nach Anspruch 8 umfasst.

## Revendications

1. Matériau actif d'électrode positive pour une batterie entièrement solide, comprenant :
un noyau comprenant un oxyde de composite de lithium capable d'adsorption réversible et de libération d'ions de lithium ; et
une couche de revêtement formée sur une surface du noyau,
dans lequel la couche de revêtement comprend un oxyde de lithium carbone représenté par la Formule 1 ci-dessous et un oxyde de lithium titane représenté par la Formule 2 ci-dessous :
[Formule 1] LiₐCO_{b},
où a est 0<a≤4 et b est 0<b≤4 ;
[Formule 2] LiₓTi_{y}O₄,
où x est 0,8≤x≤1,4 et y est 1,6≤y≤2,2, et
dans lequel la couche de revêtement inclut une première couche de revêtement et une deuxième couche de revêtement, respectivement, dans la direction allant d'un centre du noyau vers une surface du noyau,
dans lequel la première couche de revêtement comprend un oxyde de lithium carbone représenté par la Formule 1,
dans lequel la deuxième couche de revêtement comprend un oxyde de lithium titane représenté par la Formule 2, et
dans lequel l'oxyde de lithium carbone représenté par la Formule 1 et l'oxyde de lithium titane représenté par la Formule 2 sont inclus dans la couche de revêtement dans un rapport en poids de 95:5 à 25:75.

2. Matériau actif d'électrode positive pour une batterie entièrement solide selon la revendication 1,
dans lequel la couche de revêtement est compris dans une quantité de 0,1 à 10 parties en poids, sur la base d'un total de 100 parties en poids du matériau actif d'électrode positive pour une batterie entièrement solide comprenant à la fois le noyau et la couche de revêtement.

3. Matériau actif d'électrode positive pour une batterie entièrement solide selon la revendication 1,
dans lequel l'oxyde de lithium carbone représenté par la Formule 1 est compris dans une quantité de 0,1 à 1,6 partie en poids, sur la base d'un total de 100 parties en poids du matériau actif d'électrode positive pour une batterie entièrement solide comprenant à la fois le noyau et la couche de revêtement.

4. Matériau actif d'électrode positive pour une batterie entièrement solide selon la revendication 1,
dans lequel l'oxyde de lithium titane représenté par la Formule 2 est compris dans une quantité de 0,1 à 1,5 partie en poids, sur la base d'un total de 100 parties en poids du matériau actif d'électrode positive pour une batterie entièrement solide comprenant à la fois le noyau et couche de revêtement.

5. Matériau actif d'électrode positive pour une batterie entièrement solide selon la revendication 1,
dans lequel le rapport d'épaisseur de la première couche de revêtement et de la deuxième couche de revêtement est 20:80 à 80:20.

6. Matériau actif d'électrode positive pour une batterie entièrement solide selon la revendication 1,
dans lequel la première couche de revêtement a une épaisseur de 0,001 à 0,02 µm, dans lequel la deuxième couche de revêtement a une épaisseur de 0,001 à 0,02 µm.

7. Matériau actif d'électrode positive pour une batterie entièrement solide selon la revendication 1,
dans lequel l'oxyde de lithium carbone est Li₂CO₃,
dans lequel l'oxyde de lithium titane est Li₄Ti₅O₁₂.

8. Électrode positive pour une batterie entièrement solide comprenant :
un matériau actif d'électrode positive pour une batterie entièrement solide selon l'une quelconque des revendications 1 à 7 ; et un électrolyte solide à base de sulfure.

9. Électrode positive pour une batterie entièrement solide selon la revendication 8,
dans laquelle l'électrolyte solide à base de sulfure est un ou plusieurs éléments sélectionnés dans le groupe constitué de Li₂S-P₂S₅, Li₂S-P₂Sₛ-LiX (où X est un atome d'halogène), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (où m et n sont des nombres positifs, et Z est soit Ge, Zn ou Ga), Li₂S-GeS₂, Li₂S-SiS₂-Li₃PO₄, Li₂S-SiS₂-LiₚMO_{q} (où p et q sont des nombres positifs, et M est soit P, Si, Ge, B, Al, Ga ou In), Li₇₋ₓPS₆₋ₓClₓ (où 0≤x≤2), Li₇₋ₓPS₆₋ₓBrₓ (où 0≤x≤2) et Li₇₋ₓPS₆₋ₓIₓ (où 0≤x≤2).

10. Électrode positive pour une batterie entièrement solide selon la revendication 8,
dans laquelle l'électrolyte solide à base de sulfure est un électrolyte solide de type argyrodite comprenant un ou plusieurs éléments sélectionnés dans le groupe constitué de Li₆PS₅Cl, Li₆PS₅Br et Li₆PS₅I.

11. Batterie à l'état entièrement solide comprenant :
une électrode positive ;
une électrode négative ; et
une couche d'électrolyte solide disposée entre l'électrode positive et l'électrode négative,
dans laquelle l'électrode positive comprend l'électrode positive pour une batterie entièrement solide selon la revendication 8.
